# EUROPEAN PATENT APPLICATION

(11) **EP 2 288 145 A2**
(43) Date of publication of application: **23.02.2011**
(21) Application number: 10170268.6
(22) Date of filing: 21.07.2010
(51) Int. Cl.: H04N 5/445

(54) **Method for providing gui to display list for plurality of items and display apparatus applying the same**

(30) Priority: 19.08.2009 KR 20090076767
(71) Applicant: SAMSUNG ELECTRONICS CO., LTD., Suwon-si Gyeonggi-do 442-742 (KR)
(72) Inventor: Kim, Won-il, Gyeonggi-do (KR); Kwon, Yong-hwan, Gyeonggi-do (KR); Ko, Chang-seog, Gyeonggi-do (KR); Han, Ji-youn, Gyeonggi-do (KR)
(74) Representative: Davies, Robert Ean

(57) **Abstract**

Provided are a method and display apparatus for providing a graphical user interface (GUI), the method includes: receiving program information; dividing the program information into a first main group having a first set of items of program information, and a second main group having a second set of items of program information, wherein the dividing is performed according to a property, and each of the first and second main groups corresponds to a unique value of the property; if a number of items in the first main group together with a number of items in the second main group is less than or equal to a maximum number, grouping the first set of items and the second set of items together into a sub-group; and displaying the GUI including at least one item of program information from the sub-group.

## Description

### CROSS-REFERENCE TO RELATED APPLICATIONS

This application claims the benefit of Korean Patent Application No. 10-2009-0076767, filed in the Korean Intellectual Property Office on August 19, 2009, the disclosure of which is incorporated herein by reference.

### BACKGROUND OF THE INVENTION

### 1. Field of the Invention

Aspects of the present invention relate to a method for providing a graphical user interface (GUI) and a display apparatus applying the same, and more particularly, to a method for providing a GUI for displaying a list of items of program information and a display apparatus applying the same.

### 2. Description of the Related Art

In many cases, a display apparatus displays a list for various items, and thus the display apparatus may display a list of groups comprising a plurality of items.

In the case of an MP3 player which stores a plurality of music files, for instance, in displaying the plurality of music files the MP3 player may display music lists by group, e.g. of genre, singer, album, etc.

As such, a related art display apparatus generates groups having a certain characteristics, assigns items to each group according to their characteristics, and thus displays the lists of items.

However, in the related art method, it is difficult to figure out how many items exist in each group and the number of groups may increase unnecessarily. Since groups are generated inefficiently, a user may experience inconvenience in searching a desired item.

A user wishes to select a desired item more easily and rapidly. Accordingly, a method for providing a GUI which helps a user to select a desired item in a predictable and easy way is required.

### SUMMARY OF THE INVENTION

Aspects of the present invention relate to method for providing a GUI which determines the number of items included in a group, sets at least one group to include items that is less than the set number from among a plurality of items, and displays the list of items included in a certain group from among the at least one group, and a display apparatus applying the same.

An aspect of the present invention provides a method for providing a graphical user interface (GUI) which displays a plurality of items in at least one group, wherein the method may include: setting a number of items to be included in a group; setting at least one group which includes less than the set number of items from among the plurality of items; and displaying a list for items included in a specific group from among the at least one group.

The method may further include displaying information regarding a property of items included in the specific group.

The setting may set the number of items to be included in a group to be a constant.

The setting may set the number of items to be included in a group to be the number of items that are able to be displayed on one screen.

The setting may set the number of items to be included in a group to be greater than or equal to a maximum number of items having a same property.

The setting may set the number of items to be included in a group by dividing the number of a plurality of items by the number of the at least one group, and rounding up the figures after the decimal point.

The displaying may display items included in the specific group on one screen.

The method may further include: receiving information regarding a broadcast program; and extracting a list for broadcast programs from the information regarding a broadcast program, wherein the items refer to items regarding a broadcast program, and the group is a category including at least one broadcast program.

The category may be at least one of category by a first character of a title of a broadcast program, category by genre, and category by channel.

The method may further include: displaying information regarding a first character of a title of a broadcast program included in a specific group if the category is a category by a first character of a title of a broadcast program.

Another aspect of the present invention includes a display apparatus which provides a graphical user interface (GUI) to display a plurality of items in at least one group, wherein the display apparatus may include: a display unit to display an image on a screen; and a control unit to control the display unit to set the number of items to be included in a group, set at least one group to include less than the set number of items from among the plurality of items, and display items included in a specific group from among the at least one group on a screen.

The control unit may control the display unit to display information regarding a property of items included in the specific group.

The control unit may set the number of items to be included in a group to be a specific constant.

The control unit may set the number of items to be included in a group to be the number of items which are able to be displayed on one screen.

The control unit may set the number of items to be included in a group to be greater than or equal to a maximum number of items having a same property.

The control unit may set the number of items to be included in a group by dividing the number of a plurality of items by the number of the at least one group, and rounding up the figures after the decimal point.

The control unit may control the display unit to display items included in the specific group on a screen.

The display apparatus may further include: a broadcast reception unit to receive a broadcast signal including information regarding a broadcast program, wherein the control unit extracts a list for broadcast programs from the information regarding a broadcast program, wherein the items refer to items regarding a broadcast program, and wherein the group is a category including at least one broadcast program.

The category may be one of category by a first character of a title of a broadcast program, category by genre, and category by channel.

The control unit may control the display apparatus to display information regarding a first character of a title of a broadcast program included in a specific group if the category is a category by a first character of a title of a broadcast program.

Another aspect of the present invention provides a method for providing a graphical user interface (GUI) which displays a plurality of items in at least one group, wherein the method may include: dividing the plurality of items according to a property; and setting at least one group including at least one property classification, wherein the number of at least one property classification included in the group is determined so that the number of items included in each group is similar to each other.

Another aspect of the present invention provides a display apparatus which provides a graphical user interface (GUI) to display a plurality of items in at least one group, wherein the display apparatus may include: a display unit to display an image on a screen; and a control unit to control the display unit to divide the plurality of items according to their property, sets at least one group including the at least one property classification, and display a list for items included in a specific group from among the at least one group, wherein the control unit determines the number of at least one property classification included in the group so that the number of items included in each group is similar to each other.

Another aspect of the present invention provides a method for providing a graphical user interface (GUI) which displays program information for a plurality of broadcast programs, wherein the method may include: receiving the program information; dividing the program information into a first main group having a first set of items of program information, and a second main group having a second set of items of program information, wherein the dividing is performed according to a property, and each of the first and second main groups corresponds to a unique value of the property; if a number of items in the first main group together with a number of items in the second main group is less than or equal to a maximum number, grouping the first set of items of program information and the second set of items of program information together into a sub-group; and if the number of items in the first main group together with the number of items in the second main group is less than or equal to the maximum number, displaying the GUI including at least one item of program information from the sub-group.

The method may further include: if the number of items in the first main group is greater than or equal to the maximum, dividing the first main group into a plurality of sub-groups, wherein each of the plurality of sub-groups has a number of items of program information which is less than or equal to the maximum; and displaying the GUI including at least one item of program information from the plurality of sub-groups.

The property may correspond to one of a first character of a title of a broadcast program, a genre of the broadcast program and a channel providing the broadcast program.

Another aspect of the present invention provides a display apparatus which provides a graphical user interface (GUI) to display program information, wherein the display apparatus may include: a display unit which displays an image on a screen; and a broadcast receiving unit which receives the program information for a plurality of broadcast programs; a control unit which divides the received program information into a first main group and a second main group, wherein the first main group has a first set of items of program information, and the second main group has a second set of items of program information, wherein the dividing is performed according to a property, and each of the first and second main groups corresponds to a unique value of the property, and wherein if a number of items in the first main group together with a number of items in the second main group is less than or equal to a maximum number, the control unit groups the first set of items of program information and the second set of items of program information together into a sub-group and controls the display unit to display the GUI including at least one item of program information from the sub-group.

If the number of items in the first main group is greater than or equal to the maximum, the control unit may further: divide the first main group into a plurality of sub-groups, wherein each of the plurality of sub-groups has a number of items of program information which is less than or equal to the maximum, and control the display unit to display the GUI including at least one item of program information from the plurality of sub-groups.

The property may correspond to one of a first character of a title of a broadcast program, a genre of the broadcast program and a channel providing the broadcast program.

Additional aspects and/or advantages of the invention will be set forth in part in the description which follows and, in part, will be obvious from the description, or may be learned by practice of the invention.

### BRIEF DESCRIPTION OF THE DRAWINGS

These and/or other aspects and advantages of the invention will become apparent and more readily appreciated from the following description of the embodiments, taken in conjunction with the accompanying drawings, of which:
FIG. 1 is a block diagram illustrating a detailed structure of a television (TV) according to an exemplary embodiment of the present invention;
FIG. 2 is a flow chart provided to explain a method for providing a GUI according to an exemplary embodiment of the present invention;
FIG. 3 is a view illustrating a table regarding broadcast programs according to an exemplary embodiment of the present invention;
FIG. 4a to 4d are views illustrating a screen in which broadcast programs are displayed by group according to an exemplary embodiment of the present invention; and
FIG. 5 is a flow chart provided to explain a method for providing a GUI according to an exemplary embodiment of the present invention.

### DETAILED DESCRIPTION OF THE EMBODIMENTS

Exemplary embodiments of the present invention overcome the above disadvantages and other disadvantages not described above. Also, the present invention is not required to overcome the disadvantages described above, and an exemplary embodiment of the present invention may not overcome any of the problems described above.

Reference will now be made in detail to the exemplary embodiments of the present invention, examples of which are illustrated in the accompanying drawings, wherein like reference numerals refer to like elements throughout. The embodiments are described below, in order to explain the present invention by referring to the figures.

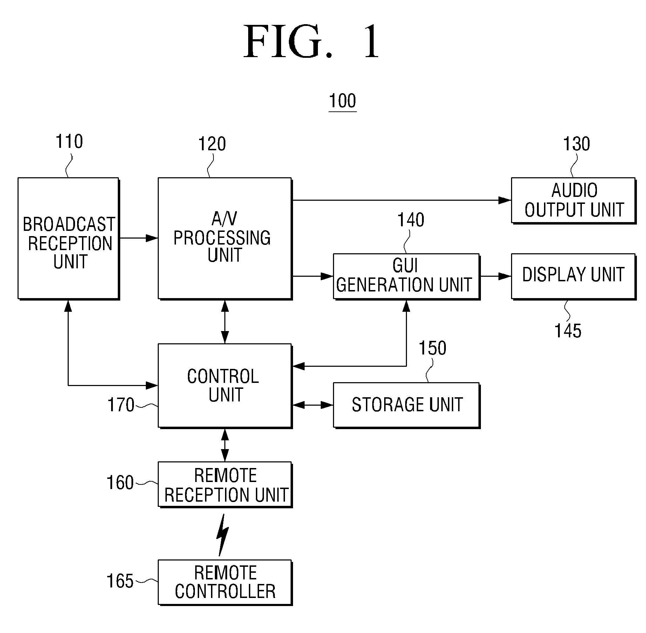

As illustrated in FIG. 1, a TV 100 may include a broadcast reception unit 110, an audio/video (A/V) processing unit 120, an audio output unit 130, a GUI generation unit 140, a display unit 145, a storage unit 150, a remote control reception unit 160, and a control unit 170.

The broadcast reception unit 110 receives broadcast from a broadcast station or a satellite with wire or wirelessly and demodulates it. The broadcast reception unit 110 receives broadcast information including an Electronic Program Guide (EPG) which is information regarding a broadcast program.

The A/V processing unit 120 performs signal processing such as video decoding, video scaling, and audio decoding on a video signal and an audio signal input from the broadcast reception unit 110. In addition, the A/V processing unit 120 outputs a video signal to the GUI generation unit 140 and an audio signal to the audio output unit 130.

If the received video and audio signal is stored in the storage unit 150, the A/V processing unit 120 stores the video and audio in the storage unit 150 in a compressed format.

The audio output unit 130 outputs the audio output from the A/V processing unit 120 to a speaker or an audio output terminal connected to an external speaker.

The GUI generation unit 140 generates a Graphic User Interface (GUI) to provide to a user. The GUI generation unit 140 generates a GUI for an OSD menu and an OSD item. In addition, the GUI generation unit 140 generates a list for items which will be displayed on the screen in an OSD format.

The display unit 145 displays a video output from the A/V processing unit 120. In addition, the display unit 145 displays the video to which an OSD of a list for items generated by the GUI generation unit 140 is added.

The storage unit 150 records and stores the multimedia contents received from the broadcast reception unit 110. In addition, the storage unit 150 stores various items in a table. For instance, items regarding a broadcast program may be stored in a table with a corresponding channel. The storage unit 150 may be realized as a hard disk, or non-volatile memory.

The remote control reception unit 160 receives a user manipulation from a remote controller 165 and transmits it to the control unit 170.

The control unit 170 analyzes a user's command based on the user manipulation received from the remote controller 165, and controls overall operation of the TV 100 according to the analyzed user command.

Specifically, the control unit 170 sets the number of items to be included in a group and sets at least one group to include less than the set number of items from among a plurality of items.

The plurality of items represents items that are displayed on a screen in a list. For instance, the items may be items regarding a broadcast program. In this case, the control unit 170 extracts a list of broadcast programs from broadcast program information received through the broadcast reception unit 110 and generates and stores items regarding the broadcast programs.

The group represents a unit for item search including at least one item. That is, a user may check a list of items by group. After the user selects a group including a desired item, the user selects the desired item from the list displayed.

For instance, a group may be a category regarding a broadcast program including at least on broadcast program. The category may be at least one of category by the first character of the title of a broadcast program, category by genre, and category by channel.

In the category by the first character of the title of a program, broadcast titles may be listed in the order of Korean alphabet or English alphabet. For instance, the category of the first character of the title of a program may be divided into a group including broadcast programs of which the first character of a title starts with a∼g, a group including broadcast programs of which the first character of a title starts with h-q, and a group including broadcast programs of which the first character of a title starts with r∼z. In this case, property information of each group is "a∼g", "h∼q", and "r∼z". The property information of each group represents information regarding items included in each group.

The category by genre represents a category set according to genre of items included in a specific group. The category by genre may be divided into a group including programs of which genre is movie, a group including programs of which genre is news, and a group including programs of which genre is drama. Each group may include items in a single genre or items in several genres. In this case, property information of each group is at least one of "movie", "news", and "drama".

The category by channel represents a category set according to channel of items included in a specific group. Each group may include items in a single channel or items in several channels. In this case, property information of each group is channel names of items included in a group. For instance, if program item MBC and program item KBS are included in a specific group, the property information of the group becomes "KBS, MBC".

As such, the control unit 170 determines the number of items to be included in a group and sets at least one group to include less than the set number of items from among a plurality of items.

The control unit 170 sets the number of items to be included in a group to be a specific constant. If the number of items to be included in a group is set to be a specific constant, the maximum number of items for all groups is always set to be the same. Accordingly, a user may identify how many items are included in a group more easily, and may also identify the number of overall items by checking the number of groups.

The control unit 170 may set the number of items to be included in a group to be the number of items to be displayed on a screen. Accordingly, a user may check all items included in a group without scrolling, and may continue to search items by simply changing a group.

The control unit 170 sets the number of items to be included in a group to be greater than or the same as the maximum number of items having the same property. For instance, if there are 8 items that start with 'a', 3 items that start with 'c', and 5 items that start with 'd', the control unit 170 sets the number of items included in a group to be more than 8. Accordingly, the items having the same property cannot be included in a different group.

The control unit 170 sets the number of items included in a group using a ratio of the number of items to the number of groups. Specifically, the control unit 170 divides the number of a plurality of items by the number of groups which is more than one (that is, the number of items / the number of groups), and rounds up the figures after the decimal point to set the number of items to be included in a group. Accordingly, the control unit 170 may keep the number of overall groups consistently even if the total number of items is changed. Since a user can predict the number of groups, the user may search items easily using groups.

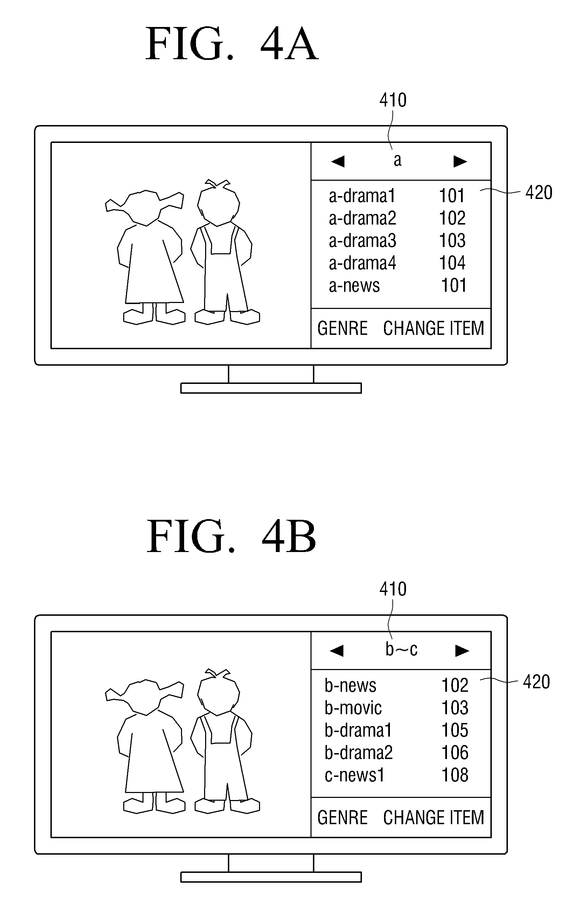

The control unit 170 controls the display unit 145 to display a list for items included in a group selected by a user from among at least one group. The example of the displayed screen will be explained later with reference to FIG. 4a to FIG. 4d. Since items included in a group are displayed on a screen, a user may search items by group.

The control unit 170 may control the display unit 145 to display the items included in the selected group on a screen. Accordingly, a user may search overall items by simply changing a group without scrolling.

The control unit 170 controls the display unit 145 to display information regarding items included in the group selected by a user. That is, the control unit 170 extracts the properties of items included in the selected group from the table regarding the items, and displays the extracted property information along with a list. Specifically, in the case of items that are categorized by the first character of the title of a program, the control unit 170 controls the display unit 145 to display information of the first character of broadcast programs included in the selected group. In the case of items that are categorized by the first character of the title of a program, the control unit 170 may control the display unit 145 to display one of "a∼g", "h∼q", and "r∼z" as property information of each group.

The control unit 170 may divide a plurality of items by property, and set at least one group including at least one property classification. In this case, the control unit 170 determines the number of at least one property classification included in each group so that the number of items included in each group is similar to each other. Accordingly, the items having the similar property cannot be included in a different group. That is, not only the items having the similar properties are grouped together, but also the number of items in each group is similar.

As such, the control unit 170 sets the number of items included in a group, sets groups according to the set number, and displays the items in the set group along with property information of the displayed group. Accordingly, the TV 100 may generate and display groups of items efficiently, and a user may select a desired item using a group which can be predicted.

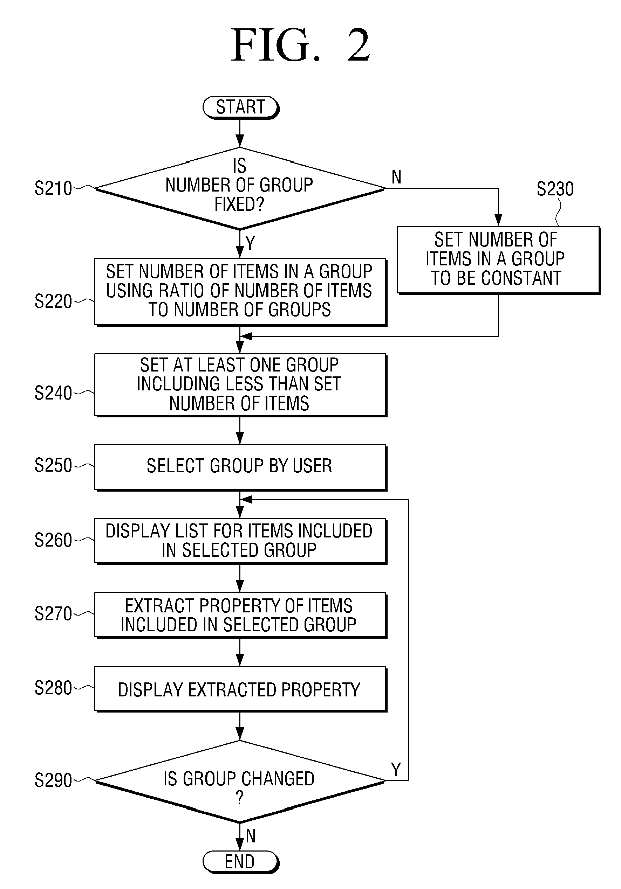

The process of setting a group and the method for providing a GUI displaying items in each group will be explained with reference to FIG. 2. FIG. 2 is a flow chart provided to explain a method for providing a GUI according to an exemplary embodiment of the present invention.

The TV 100 determines whether to fix the number of group (S210). If it is determined that the number of group is fixed (S210-Y), the TV 100 determines the number of items to be included in a group using a ratio of the number of items to the number of groups (S220). Specifically, the TV 100 divides the number of a plurality of items by the number of at least one group (that is, the number of items/ the number of groups) and rounds up the figures after the decimal point to set the number of items to be included in a group. Accordingly, the TV 100 may keep the number of overall groups consistently even if the total number of items is changed. Since a user can predict the number of groups, the user may search items easily using groups.

On the other hand, if it is determined that the number of group is not fixed (S210-N), the TV sets the number of items to be included in a group to be a specific constant (S230). If the number of items to be included in a group is set to be a specific constant, the maximum number of items for all groups is always set to be the same. Accordingly, a user may identify how many items are included in a group more easily, and may also identify the number of overall items by checking the number of groups.

The TV 100 may set the number of items to be included in a group to be the number of items to be displayed on a screen. Accordingly, a user may check all items included in a group without scrolling, and may continue to search items by simply changing a group.

The TV 100 sets the number of items to be included in a group to be greater than or the same as the maximum number of items having the same property. For instance, if there are 8 items that start with 'a', 3 items that start with 'c', and 5 items that start with 'd', the TV 100 sets the number of items included in a group to be more than 8. Accordingly, the items having the same property cannot be included in a different group.

The TV 100 sets at least one group including less than the set number of items from among a plurality of items (S240). If a group is selected by a user (S250), a list for the items included in the selected is displayed (S260). The example of the displayed screen will be explained later with reference to FIG. 4a to FIG. 4d. Since items included in a group are displayed on a screen, a user may search items by group.

The TV 100 may display the items included in the selected group on a screen. Accordingly, a user may search overall items by simply changing a group without scrolling.

The TV 100 extracts the property of items included in the group selected by a user (S270). Specifically, if items are categorized by the first character of the title of a program, the TV extracts information regarding the first character of the title of broadcast programs included in the selected group. For instance, if items are categorized by the first character of the title of a program, the TV 100 extracts one of "a∼g", "h∼q", and "r∼z" as the property information of each group.

The TV 100 displays the property information of items included in the selected group (S280). For instance, if items are categorized by the first character of the title of a program, the TV 100 displays one of "a∼g", "h∼q", and "r∼z" as the property information of each group.

The TV 100 determines whether a user input a command to change a displayed group (S290). If it is determined that the command to change a group is input (S290-Y), the TV 100 goes back to S260 and displays a list for items included in a changed group (S260).

As such, the TV 100 sets the number of items included in a group, sets groups according to the set number, and displays the items in the set group along with property information of the displayed group. Accordingly, the TV 100 may generate and display groups of items efficiently, and a user may select a desired item using a group which can be predicted.

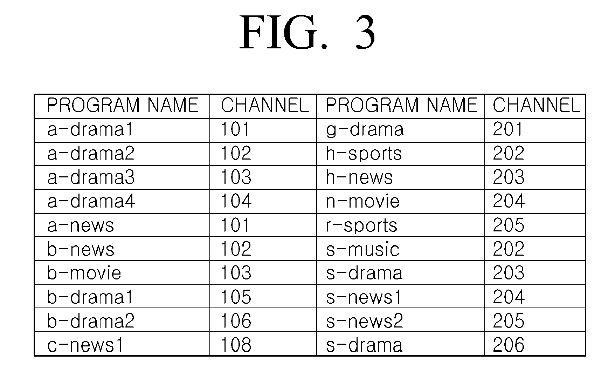

An example of displaying a list of broadcast programs for each group based on the above description will be provided with reference to FIG. 3 to FIG. 4d. FIG. 3 is a view illustrating a table regarding broadcast programs according to an exemplary embodiment of the present invention. As illustrated in FIG. 3, the table of broadcast programs includes information on program names and channels. The table of broadcast programs is generated based on EPG information received through a broadcast signal.

FIG. 4a to 4d are views illustrating the screen of TV 100 in which broadcast programs included in the table in FIG. 3 are displayed by group according to an exemplary embodiment of the present invention. FIG. 4a to 4d illustrates the case in which items are categorized by the first character of the title of a program.

As illustrated in FIG. 4a, the screen of TV 100 includes a group property display area 410 and an item list display area 420. In FIG. 4a, the TV 100 displays 5 items as the first group. That is, the TV 100 sets the number of items to be included in a group to be 5.

In other words, in FIG. 4a, the TV 100 sets the number of items included in a group to be 5, and sets the first 5 items in FIG. 3 as a group. Accordingly, it can be seen that the first 5 items in the table of FIG. 3 are displayed in the item list display area 420 of the screen illustrated in FIG. 4a.

As illustrated in FIG. 4a, the TV 100 displays 'a' in the group property display area 410. That is, since all items displayed in the item list display area 420 are broadcast programs of which titles start with 'a', the TV 100 displays 'a' in the group property display area 410.

FIG. 4b illustrates a screen of the second group generated based on the table in FIG. 3. In FIG. 4b, the second 5 items in the table of FIG. 3 are displayed in the item list display area 420.

As illustrated in FIG. 4b, the TV 100 displays 'b∼c' in the group property display area 410. That is, since all items displayed in the item list display area 420 are broadcast programs of which titles start with 'b∼c', the TV 100 displays 'b∼c' in the group property display area 410.

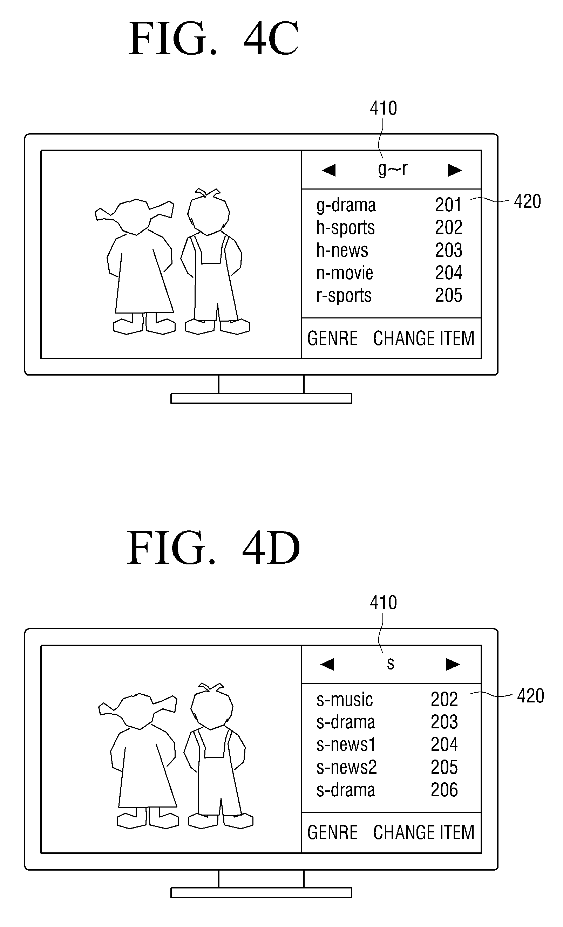

FIG. 4c illustrates a screen of the third group generated based on the table in FIG. 3. In FIG. 4c, the third 5 items in the table of FIG. 3 are displayed in the item list display area 420.

As illustrated in FIG. 4c, the TV 100 displays 'g∼r' in the group property display area 410. That is, since all items displayed in the item list display area 420 are broadcast programs of which titles start with 'g, h, n, r', the TV 100 displays 'g∼r' in the group property display area 410.

FIG. 4d illustrates a screen of the fourth group generated based on the table in FIG. 3. In FIG. 4d, the fourth 5 items in the table of FIG. 3 are displayed in the item list display area 420.

As illustrated in FIG. 4d, the TV 100 displays 's' in the group property display area 410. That is, since all items displayed in the item list display area 420 are broadcast programs of which titles start with 's', the TV 100 displays 's' in the group property display area 410.

As such, the TV 100 divides 20 broadcast programs in FIG. 3 into 4 groups, each group comprising 5 broadcast programs and displays them. Since the number of items to be included in a group is determined before the group is determined, the TV 100 may display an appropriate number of items on a screen.

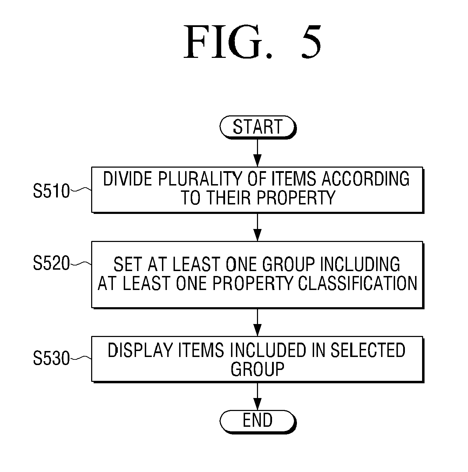

FIG. 5 is a flow chart provided to explain a method for providing a GUI according to an exemplary embodiment of the present invention.

The TV 100 divides a plurality of items according to their properties (S510). For instance, if broadcast programs are categorized by the first character of their titles, the TV 100 may divide the plurality of broadcast programs by the first alphabet character of their titles. That is, the TV 100 may divide a plurality of broadcast programs into broadcast programs of which the first character of the tile starts with 'a', broadcast programs of which the first character of the tile starts with 'b', ..., broadcast programs of which the first character of the tile starts with 'z'.

The TV 100 sets at least one group including at least one property (S520). In this case, the TV 100 determines the number of at least one property classification included in each group so that the number of items included in each group is similar to each other.

For instance, if the result of classification of broadcast programs based on the first character of their titles shows that there are 5 programs of which titles start with 'a', 3 programs of which titles start with 'b', 3 programs of which titles start with 'c', 5 programs of which titles start with 'd', 2 programs of which titles start with 'e', and 4 programs of which titles start with 'f', the TV 100 sets four groups, the first group with programs of which titles start with 'a', second group with programs of which titles start with 'b' and 'c', the third group with programs of which titles start with 'd', and the fourth group with programs of which titles start with 'e' and 'f'. This way, the number of items in each group becomes similar with the first group having 5, the second group having 5, the third group having 5, and the fourth group having 6.

The TV 100 displays the items included in the selected group on the screen (S530).

Since the number of items to be included in a group is determined before the group is determined, the TV 100 may display an appropriate number of items on a screen.

In an exemplary embodiment of the present invention, the items of a group are broadcast programs, but this is only an example. The present invention may be applied when other kinds of items form a group. For instance, in the case of an MP3, items may be music files and a group may be a play list, and in the case of a PMP, items may be video files and a group may be a video file list.

In an exemplary embodiment of the present invention, a display apparatus is the TV 100, but this is only an example. The present invention may be applied to any display apparatus that can display a list of a plurality of items by group. That is, the technical feature of the present invention may be applied to displays apparatuses such as an MP3 player, a PMP, a DMB receiver, and a mobile phone.

According to various exemplary embodiments of the present invention, a GUI providing method for displaying a list for items included in a specific group among at least one group after the number of items to be included in a group is set and then at least one group including the less than the set number of items among a plurality of items is set, and a display apparatus using the same are provided. Accordingly, it may be possible for a user to select a desired item in a predictable and easy way.

In particular, since a group includes a consistent number of items, a user may predict the size of the group easily, and a display apparatus may maintain consistency in configuring a GUI and enhance accessibility by the user.

Although a few embodiments of the present invention have been shown and described, it would be appreciated by those skilled in the art that changes may be made in this embodiment without departing from the principles and spirit of the invention, the scope of which is defined in the claims and their equivalents.

## Claims

1. A method for providing a graphical user interface (GUI) which displays a plurality of items in at least one group, the method comprising:
setting a number of items to be included in a group;
setting at least one group which includes less than the set number of items from among the plurality of items; and
displaying a list for items included in a specific group from among the at least one group.

2. The method as claimed in claim 1, further comprising:
displaying information regarding a property of items included in the specific group.

3. The method as claimed in claim 1 or 2, wherein the setting sets the number of items to be included in a group to be a constant.

4. The method as claimed in any one of the preceding claims, wherein the setting sets the number of items to be included in a group to be the number of items that are able to be displayed on one screen.

5. The method as claimed in any one of the preceding claims, wherein the setting sets the number of items to be included in a group to be greater than or equal to a maximum number of items having a same property.

6. The method as claimed in any one of the preceding claims, wherein the setting sets the number of items to be included in a group by dividing the number of a plurality of items by the number of the at least one group, and rounding up the figures after the decimal point.

7. The method as claimed in any one of the preceding claims, wherein the displaying displays items included in the specific group on one screen.

8. The method as claimed in any one of the preceding claims, further comprising:
receiving information regarding a broadcast program; and
extracting a list for broadcast programs from the information regarding a broadcast program,
wherein the items refer to items regarding a broadcast program, and the group is a category including at least one broadcast program.

9. The method as claimed in claim 8, wherein the category is at least one of category by a first character of a title of a broadcast program, category by genre, and category by channel.

10. The method as claimed in claim 9, further comprising:
displaying information regarding a first character of a title of a broadcast program included in a specific group if the category is a category by a first character of a title of a broadcast program.

11. A display apparatus which provides a graphical user interface (GUI) to display a plurality of items in at least one group, the display apparatus comprising:
a display unit to display an image on a screen; and
a control unit to control the display unit to set the number of items to be included in a group, set at least one group to include less than the set number of items from among the plurality of items, and display items included in a specific group from among the at least one group on a screen.

12. The display apparatus as claimed in claim 11, wherein the control unit controls the display unit to display information regarding a property of items included in the specific group.

13. The display apparatus as claimed in claim 11 or 12, wherein the control unit sets the number of items to be included in a group to be a specific constant.

14. The display apparatus as claimed in any one of claims 11 to 13, wherein the control unit sets the number of items to be included in a group to be the number of items which are able to be displayed on one screen.

15. The display apparatus as claimed in any one of claims 11 to 14, wherein the control unit sets the number of items to be included in a group to be greater than or equal to a maximum number of items having a same property.
